Europäisches Patentamt

**European Patent Office**

**Office européen des brevets**

(19)

(11) **EP 0 941 454 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(21) Anmeldenummer: **97951101.1**

(22) Anmeldetag: **01.12.1997**

(51) Int Cl.$^7$: **G01D 5/249**, G01D 5/347

(86) Internationale Anmeldenummer:
**PCT/DE97/02798**

(87) Internationale Veröffentlichungsnummer:
**WO 98/25101 (11.06.1998 Gazette 1998/24)**

(54) **ABSOLUTWERTGEBER, INSBESONDERE DREHGEBER ZUR ERFASSUNG DES LENKWINKELS EINES KRAFTFAHRZEUGS**

ABSOLUTE VALUE SENSOR, IN PARTICULAR ROTATION SENSOR FOR SENSING THE STEERING ANGLE OF A MOTOR VEHICLE

CAPTEUR DE VALEURS ABSOLUES, NOTAMMENT CAPTEUR D'ANGLE DE ROTATION POUR SAISIR L'ANGLE DE BRAQUAGE D'UN VEHICULE A MOTEUR

(84) Benannte Vertragsstaaten:
**DE ES FR GB IT PT SE**

(30) Priorität: **02.12.1996 DE 19649911**
**12.12.1996 DE 19651771**

(43) Veröffentlichungstag der Anmeldung:
**15.09.1999 Patentblatt 1999/37**

(73) Patentinhaber: **TRW Automotive Electronics & Components GmbH & Co. KG**
**78315 Radolfzell (DE)**

(72) Erfinder:
• **PETER, Cornelius**
**D-77815 Bühl (DE)**
• **HUBER, Wolfgang**
**D-78333 Wahlwies (DE)**
• **STEWART, Trevor**
**D-78239 Rielasingen-Worblingen (DE)**

• **PAVLIS, Zdenek**
**D-78224 Singen (DE)**
• **CARATTO, Danilo**
**I-10137 Torino (IT)**

(74) Vertreter: **Eder, Thomas, Dr.-Ing.**
**Eder & Schieschke, Patentanwälte,**
**Elisabethstrasse 34**
**80796 München (DE)**

(56) Entgegenhaltungen:
**DE-A- 19 506 019        GB-A- 2 126 444**

• **DR. E.M. PETRIU: "Absolute-type position transducers using a pseudo-random encoding" IEEE INSTRUMENTATION AND MEASURMENT TECHNOLOGY CONFERENCE , 27. - 29.April 1987, BOSTON, MASS, US, Seiten 290-295, XP002064261**

**Beschreibung**

Die Erfindung betrifft einen digitalen Absolutweitgeber, insbesondere einen Drehgeber zur Erfassung des Lenkwinkels eines Kraftfahrzeugs.

Die möglichst exakte Erfassung des Lenkwinkels gewinnt bei modernen Kraftfahrzeugen immer größere Bedeutung, wobei der Lenkwinkel beispielsweise bei aktiven dynamischen Fahrwerken zur Steuerung bzw. Regelung des Fahrwerkzustands oder Fahrwerkverhaltens benötigt wird. In praktisch allen Fällen wird die möglichst exakte Erfassung des absoluten Weits des Lenkwinkels benötigt. Dies erfordert jedoch hochgenaue Absolutwertgeber, die in der Regel aufwendig konstruiert und entsprechend teuer sind.

Bekannte digitale Absolutwertgeber (z.B. JP 4-1522 A), die als Drehgeber zur Erfassung des absoluten Drehwinkel geeignet sind, weisen in der Regel eine Kodierung auf, die durch die Abtastung jedes Worts, d.h. der Bits in einer Zeile, die Ermittlung eines diesem Wort zugeordneten Werts ermöglicht. Nachteilig bei derartigen digitalen Absolutdrehgebern ist jedoch, daß die Worte eine relativ große Breite aufweisen müssen, um eine ausreichende Auflösung zu gewährleisten. Zwar ist hierzu aus der DE 195 45 949 A1 ein digitales Absolutpositions-Codiergerät bzw. -verfahren bekannt, bei dem die Anzahl der erforderlichen Spuren zur Schaffung eines Absolutweitgebers mit einem einschrittigen Code reduziert ist, jedoch wird dieser Vorteil nur durch die Verwendung von mehreren Detektoren pro Spur erreicht. Dies bedeutet einen höheren schaltungstechnischen Aufwand.

Dies gilt auch für solche Absolutwertgeber, die nur über eine einzige Spur verfügen, und mittels mehrerer Sensoren gleichzeitig mehrere Bit der Spur abtasten, wobei in der Spur die digitalen Worte eines Codes aneinandergereiht sind (z.B. JP 08-122099 A; DE 40 22 503 C1; DE 195 18 664 C1).

Die vorstehend genannten Absolutwertgeber ermöglichen in jeder Position das sofortige Feststellen der absoluten Position, erfordern jedoch einen hohen Aufwand.

Relativwertgeber sind zwar einfacher und kostengünstiger realisierbar, jedoch ist in diesem Fall vor einer Inbetriebnahme des Systems ein Initialisierungsvorgang zur Eichung des Relativwertgebers erforderlich. Hierzu muss beispielsweise das Lenksystems bzw. das Lenkrad in eine definierte Position gebracht werden, von der ausgehend durch die Relativerfassung des Lenkwinkels absolute Werte für den Lenkwinkel bestimmbar sind. Zwar besteht die Möglichkeit, den Ausgangswert (Initialisierungsweit) zur Ermittlung der Absolutwerte auch so zu speichern, dass bei einem Spannungslos-Werden des Systems der Wert erhalten bleibt. Problematisch ist jedoch, dass nach einem Ausschalten des Systems Lenkbewegungen nicht erfasst werden und demzufolge nach jedem Aktivieren des Systems ein Initialisiervorgang durchlaufen werden müsste.

Darüber hinaus sind Absolutwertgeber bekannt, die inkrementale und absolute Codier- bzw. Decodierverfahren verbinden (z.B. EP 0 530 176 A1; EP 0 545 701 A1). Dabei werden in der Regel über den gesamten zu erfassenden Bereich ein inkrementaler Code verwendet und an einer oder mehreren ausgewählten Positionen ein absoluter Code. Die absoluten Positionen werden mittels eines ersten Detektors wie bei üblichen Absolutwertgebern erfasst, wobei jedoch nur eine geringe Breite der digitalen Worte erforderlich ist. Ausgehend von den dann bekannten absoluten Positionen kann dann mittels des inkrementalen Codes, der von einem weiteren Detektor abgetastet wird, bei einer Relativbewegung von Code und Detektor die jeweilig absolute Position bestimmt werden.

Auch dieser Typ Absolutwertgeber erfordert einen relativ hohen Aufwand und kann nach einem Stromloswerden die absolute Position erst dann korrekt erfassen, wenn der erste absolute Code erreicht wurde. Dies ist in der KFZ-Technik aus Gründen der Sicherheit nicht zulässig.

Der Erfindung liegt daher die Aufgabe zugrunde, einen Absolutwertgeber, insbesondere Drehgeber zur Erfassung des Lenkwinkels eines Kraftfahrzeugs, zu schaffen, der möglichst einfach und kostengünstig realisierbar ist und gleichzeitig eine ausreichend Betriebssicherheit, insbesondere auch nach einem Stromloswerden des Systems, gewährleistet.

Die Erfindung löst diese Aufgabe mit den Merkmalen des Patentanspruchs 1.

Durch die zumindest einmalige Bestimmung des absoluten Drehwinkels durch die Auswertung einer vorbestimmten Anzahl p aufeinanderfolgend detektierter digitaler Worte $W_i$ ergibt sich der Vorteil einer wesentlich geringeren erforderlichen Wortbreite. Zwar ist für die erstmalige Bestimmung des Absolutwerts das Überfahren von p Worten nötig, so dass hierzu das Geberteil zunächst um das p-fache der Auflösung bewegt werden muss. Nach der erstmaligen Bestimmung des Absolut werts wird dann jedoch wieder die maximale Auflösung erreicht, d.h. der Absolutwert kann mit jedem Überfahren eines Worts $W_i$ exakt ermittelt werden. Alle Folgen $[W_i, W_{i+1}, ..., W_{i+p-1}]$ von aus der vorbestimmten Anzahl p bestehenden aufeinanderfolgenden Worten $W_i$ der Kodierung müssen dazu zumindest innerhalb eines vorbestimmten Eindeutigkeitsbereichs der Kodierung eindeutig sein. Ohne ein Erfüllen dieser Bedingung kann einem bestimmten p-Tupel kein eindeutiger Absolutwert zugeordnet werden. Dagegen müssen innerhalb jedes Eindeutigkeitsbereichs die digitalen Worte $W_i$ nicht eindeutig sein.

Bei der bevorzugten Ausführungsform der Erfindung ist zumindest einer der folgenden Bedingungen erfüllt:

a) jeweils zwei benachbarte Worte $W_i$, $W_{i+1}$ weisen unterschiedliche Werte auf, d.h. es gilt $W_i \neq W_{i+1}$;

Hierdurch wird die Schritterkennung allein durch die Auswertung des durch die Kodierung erzeugten Signals ermöglicht, so dass auf eine synchronisierte Abtastung verzichtet werden kann;

b) die jeweils einem Wort W; benachbarten Worte $W_{i-1}$ und $W_{i+1}$ weisen unterschiedliche Werte auf, d.h. es gilt $W_{i-1} \neq W_{i+1}$;

Hierdurch wird eine Erkennung eines Wechsels der Bewegungsrichtung allein durch die Auswertung des durch die Kodierung erzeugten Signals ermöglicht; Ohne diese Bedingung wäre bei einem Wechsel der Bewegungsrichtung nach vorheriger Erfassung der Worte $W_{i-1}$, $W_i$,...,$W_{p-2}$,$W_{p-1}$ nicht zu entscheiden, ob im Fall $W_{p-2}=W_p$ der Wert $W_p$ durch eine Weiterbewegung in gleicher Richtung oder eine entgegengesetzte Bewegung entstanden ist; Dies gilt zumindest dann, wenn die Auswerteeinheit das p-Tupel in Form eines FIFO-Registers realisiert, wobei jedes neue Wort $W_i$ immer von demselben Ende her in das Register der festen Länge p "eingeschoben" wird und das jeweils vor dem Einschieben letzte Wort entfällt, unabhängig davon, ob vor der Erfassung dieses $W_i$ eine Änderung der Bewegungsrichtung erfolgt ist;

c) kein p-Tupel $[W_i,W_{i+1},...,W_{i+p-1}]$ darf innerhalb des zumindest einen Eindeutigkeitsbereichs der Kodierung als gespiegeltes p-Tupel $[W_{i+p-1},...,W_{i+1},W_i]$ existieren, d.h. es gilt $[W_i,W_{i+1},...,W_{i+p-1}] \neq [W_{i+p-1-k},..., W_{i+1-k}, W_{i-k}]$;

Andernfalls wäre allein durch die Auswertung des durch die Kodierung erzeugten Signals nicht zu entscheiden, ob das betreffende p-Tupel bei Überfahren aus der einen oder anderen Richtung erzeugt wurde; Es wird hierdurch somit eine Erkennung der absoluten Bewegungsrichtung ermöglicht;

Diese Bedingung könnte nur dann entfallen, wenn in jedem Fall eine absolute Erkennung der Bewegungsrichtung ggf. durch das Vorsehen einer zusätzlichen Einrichtung, gewährleistet wäre.

Nach einer Ausführungsform der Erfindung kann die Auswerteeinheit die Bestimmung des Absolutwerts in jedem Fall durch das Zuordnen des betreffenden Vorbestimmten Wertes zu dem aktuellen p-Tupel vornehmen.

Es besteht jedoch auch die Möglichkeit, diese Möglichkeit der Absolutwertbestimmung nur einmalig oder in bestimmten Abständen bzw. zu bestimmten Anlässen vorzunehmen und künftige Absolutwerte durch ein Inkrementieren bzw. Dekrementieren zu ermitteln. Es ist somit lediglich eine Auswertung zur Schritt-Erkennung und zur Erkennung einer Änderung der Bewegungsrichtung nötig.

Eine Änderung der Bewegungsrichtung kann durch das Erfüllen der vorgenannten Bedingung b) in einfacher Weise durch das Auswerten der Worte $W_{p-2}$ und $W_p$ erfolgen: Stimmen die beiden Worte überein so hat eine Änderung der Bewegungsrichtung stattgefunden.

In einer Ausführungsform der Erfindung, die eine zusätzliche Sicherheit gewährleistet, kann der Absolutwert sowohl durch die Auswertung der p-Tupel als auch durch Inkrementierung/Dekrementierung des vorherigen Werts ermittelt werden und bei fehlender Übereinstimmen ein Fehlersignal erzeugt werden.

Bei der bevorzugten Ausführungsform der Erfindung werden p=3 aufeinanderfolgende Worte $W_i$ ausgewertet. Zusammen mit einer Wortbreite m=3 (3 Bit) der digitalen Worte ergibt sich ein guter Kompromiss zwischen einer ausreichenden Kodierungslänge (zulässige Anzahl n der digitalen Worte unter Verwendung der vorgenannten Bedingungen) und damit der erreichbaren Auflösung und dem Rechenaufwand für die Auswertung sowie dem erforderlichen Bewegungsweg für die erstmalige Bestimmung des absoluten Positionswerts, wofür zumindest p (hier p=3) digitale Worte von dem zumindest einen Detektor erfasst werden müssen.

Nach der bevorzugten Ausführungsform der Erfindung umfasst die Kodierung zumindest zwei zusammenhängende Bereiche, wobei sowohl jeweils innerhalb der Bereiche als auch an den Nahtstellen die vorgenannten Kodierungsbedingungen erfüllt sind. Die Kodierung innerhalb der Bereiche ist vorzugsweise identisch und verläuft in derselben Richtung.

Nach einer weiteren Ausführungsform der Erfindung ist zur Schritterkennung und/oder zur Erkennung der Drehrichtung und/oder eines Drehrichtungwechsels eine zu den Spuren der digitalen Worte $W_i$ zusätzliche Spur mit einer aufeinanderfolgenden Folge der Werte logisch "Null" und logisch "Eins" vorgesehen oder eine Spur der digitalen Worte der Kodierung in dieser Weise ausgebildet ist.

Zur Abtastung der Spur mit der alternierenden Folge der Werte logisch "Null" und logisch "Eins" können zwei vorzugsweise um einen halben Schritt versetzte Detektoren vorgesehen sein, wobei die Auswerteeinheit aus der Phasenverschiebung der Sensorsignale die Drehrichtung und/oder einen Drehrichtungswechsel ermittelt. Zusätzlich kann die Auswerteeinheit aus dem Signal eines oder beider Sensoren feststellen, ob ein Schritt erfolgt ist und hiervon abhängig eine Abtastung des digitalen Worts vornehmen.

Die Kodierung kann dabei so ausgebildet sein, dass innerhalb des zumindest einen Eindeutigkeitsbereichs zu einer, mehreren oder allen Folgen $[W_i,W_{i+1},...,W_{i+p-1}]$ der Kodierung auch die jeweils gespiegelte Folge $[W_{i+p-1},..., W_{i+1},W_i]$ existiert und dass die Auswerteinheit aus der Drehrichtung und dem detektierten p-Tupel den Absolutwert bestimmt. Hierdurch ergibt sich eine maximale Länge der Kodierung bei sichergestellter Schritterkennung.

Die Mehrdeutigkeit einer Kodierung mit mehreren Eindeutigkeitsbereichen außerhalb der Eindeutigkeitsbereiche kann erfindungsgemäß durch das Vorsehen einer Erfassungseinrichtung zur groben Erfassung der absoluten Position und das zusätzliche Auswerten deren Positionssignals erfolgen. Die Genauigkeit dieser Groberfassungseinrichtung muss in jedem Fall besser sein als die Differenz der den beiden Grenzen jedes der mindestens zwei Kodierungsbereiche entsprechenden Positionswerte. Die Auswerteeinheit kann dann den exakten absoluten Positionswert durch die Auswertung des Signals des zumindest einen Detektors zur Erfassung der Kodierung und des Signal der Groberfassungseinrichtung mit der Genauigkeit und Auflösung der Kodierung bestimmen.

In der bevorzugten Ausführungsform der Erfindung führt die Auswerteeinheit zur Ermittlung des exakten absoluten Positionswerts folgende Schritte ausführt:

a) Ermittlung des dem aktuellen Signal der Erfassungseinrichtung zur groben Erfassung entsprechenden Positionswerts $\alpha_a$;

b) Ermittlung einer unteren Schranke $\alpha_a-\delta$ und oberen Schranke $\alpha_a+\delta$ eines zulässigen Toleranzbereichs $[\alpha_a-\delta; \alpha_a+\delta]$ für den ermittelten Positionswert $\alpha_a$, wobei die Breite ($2\delta$) des Toleranzbereich kleiner ist als jeder Eindeutigkeitsbereich der Kodierung des Geberteils;

c) Ermittlung des mehrdeutigen Positionswerts $\alpha_r$ durch Auswertung des Signals des zumindest einen die Kodierung erfassenden Detektors;

d) Ermittlung des korrigierten absoluten Wertes $\alpha_{r,korr}$ nach der Vorschrift:

$$\alpha_{r,korr} = INT[(\alpha_a+\delta)/\alpha_{r,max}]\cdot \alpha_{r,max} + \alpha_r \text{ für } \alpha_r \leq \alpha_{r,max}/2$$

$$\alpha_{r,korr} = INT[(\alpha_a-\delta)/\alpha_{r,max}] \cdot \alpha_{r,max} + \alpha_r \text{ für } \alpha_r > \alpha_{r,max}/2$$

Dabei ist mit $\alpha_{r,max}$ der maximal mögliche Wert für die absolute (mehrdeutige) Position durch die Auswertung der p-Tupel bezeichnet.

In der bevorzugten Ausführungsform prüft die Auswerteeinheit, ob der ermittelte absolute Positionswert $\alpha_{r,korr}$ innerhalb des zulässigen Toleranzbereichs $\alpha_a-\delta<\alpha_{r,korr}<\alpha_a+\delta$ liegt und erzeugt im Fehlerfall ein Fehlersignal und/oder führt einen Abgleich der Groberfassungseinrichtung durch. Beispielsweise kann die Auswerteeinheit hierzu die Differenz zwischen dem ermittelten Absolutwert $\alpha_{r,korr}$ und dem Positionswert $\alpha_a$ ermitteln und in einem vorzugsweise nichtflüchtigen Speicher ablegen und für künftige Ermittlungen des Positionswerts $\alpha_a$ als Korrekturwert verwenden.

Nach einer Ausführungsform der Erfindung ist der Absolutwertgeber als Drehgeber ausgebildet, wobei das Geberteil drehbar mit einem Teil verbindbar ist, dessen Drehwinkel erfasst werden soll, z.b. der Lenkwelle eines KFZ oder einem damit verbundenen Teil. Die auf dem Geberteil vorgesehene Kodierung ist vorzugsweise endlos und auf dem Außenumfang des Geberteils vorgesehen. An jeder Nahtstelle sind die Bedingungen gemäß Anspruch 2 erfüllt.

Weitere Ausführungsformen der Erfindung ergeben sich aus den abhängigen Ansprüchen.

Die Erfindung wird nachfolgend anhand eines in der Zeichnung dargestellten Ausführungsbeispiels näher erläutert. In der Zeichnung zeigen:

Fig. 1   eine perspektivische Explosionsdarstellung der für das Verständnis der Erfindung wesentlichen Teile eines Lenksystems mit einem digitalen Absolutwertgeber nach der Erfindung;

Fig. 2   einen Längsschnitt durch das montierte Lenksystem gemäß Fig. 1 und

Fig. 3   eine schematische Darstellung einer zulässigen Kodierung nach einer bevorzugten Ausführungsform der Erfindung.

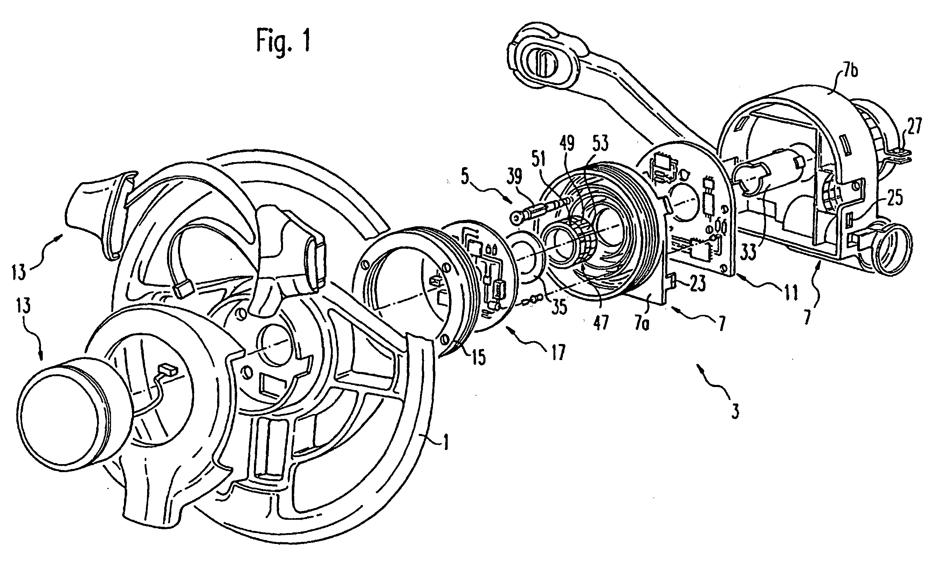

Bei den in Fig. 1 dargestellten Komponenten handelt es sich im Wesentlichen um das Lenkrad 1 und eine Multifunktionseinheit 3, die u.a. einen Absolutwertgeber 5 zur Erfassung des Lenkwinkels umfasst.

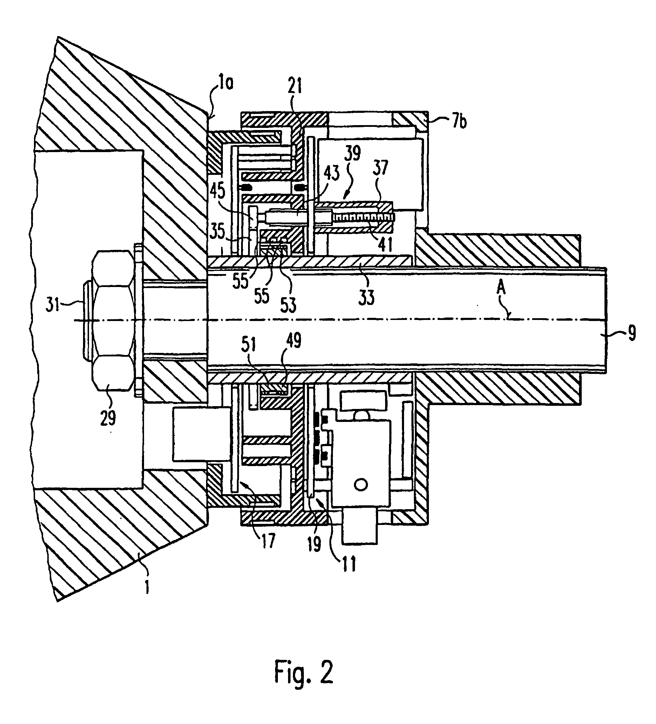

Die Multifunktionseinheit 3 besteht aus einem ortsfesten Gehäuseteil 7, das aus den beiden Hälften 7a und 7b besteht. Das ortsfeste Gehäuseteil 7 ist so ausgebildet, dass es auf eine Lenksäule 9 (Fig. 2) aufgeschoben werden kann und diese umgibt.

In der Hälfte 7b des Gehäuseteils 7 können, wie in Fig. 1 dargestellt, weitere Komponenten, wie Lenkstockschalter, ein Zündschloss oder dergleichen, integriert sein. Des Weiteren ist im Inneren der Hälfte 7b des Gehäusteils 7 eine Elektronikeinheit 11 vorgesehen, welche die erforderlichen Schaltkreise auf der ortsfesten Seite der Multifunktionseinheit 3 umfasst. Hierbei kann es sich im Einzelnen um die Schaltkreise für den Lenkstockschalter, das Zündschloss und die Datenübertragung von und zu den am Lenkrad vorgesehenen Funktionseinheiten 13 sowie um die Auswerteeinheit für den Absolutwertgeber nach der Erfindung handeln.

Des Weiteren weist die Multifünktionseinheit 3 ein Gehäuseteil 15 auf, welches an der Rückseite 1a des Nabenbereichs des Lenkrads befestigbar ist und zur Aufnahme einer Sende/Empfangseinheit 17 dient, welche die für die Datenübertragung von und zu den am Lenkrad 1 angeordneten Funktionseinheiten 13 erforderlichen Schaltkreise umfasst.

Wie aus Fig. 2 ersichtlich, sind die Schaltkreise der Elektronikeinheit 11 auf einer Platine 19 angeordnet, welche im Inneren der Hälfte 7b des Gehäuseteils 7 in nicht näher dargestellter Weise gehalten ist. Der Innenraum der Hälfte 7b ist durch die radial zur Achse A der Lenksäule 9 verlaufenden rückseitigen Wandung der Hälfte 7a des Gehäuseteils 7 im Wesentlichen dicht abgeschlossen. Hierzu ist die Hälfte 7a mittels daran ausgebildeter Eingriffselemente 23 mit der Hälfte 7b verbunden, wobei die Eingriffselemente 23 in entsprechende Ausnehmungen 25 in der Hälfte 7b einrasten.

Der rückwärtige Bereich der Hälfte 7b des Gehäuseteils 7 umschließt mit seiner zentralen Ausnehmung die Lenksäule 9 und kann mittels einer Schelle 27 drehfest mit der in Bezug auf das übrige Fahrzeug ortsfesten (jedenfalls nicht mit der Lenkwelle drehbaren) Außenseite der Lenksäule 9 verbunden werden. Das Lenkrad 1 ist mittels einer Mutter 29 mit der Lenkwelle 31 verbunden, welche zu diesem Zweck in ihrem vordersten Bereich mit einem Gewinde versehen ist. Des Weiteren ist mit dem Lenkrad 1 drehfest eine Hülse 33 verbunden, welche die Lenksäule 9 umgreift. Auf der Hülse 33 ist drehfest ein erstes Zahnrad 35 befestigt, das somit zusammen mit dem Lenkrad 1 drehbar ist.

Auf der rückwärtigen Seite der Platine 19 ist eine Tauchspule 37 einer als Erfassungseinrichtung zur groben Erfassung des absoluten Lenkwinkels dienenden Tauchspuleneinheit 39 angeordnet. Die Tauchspule 37 kann hierzu nicht näher dargestellte Anschlusskontakte für die Spule aufweisen, welche in entsprechende Kontaktbohrungen in der Platine 19 eingreifen und gleichzeitig mit den übrigen Elektronikbauelementen verlötet werden können.

Die Tauchspuleneinheit 39 umfasst des Weiteren eine Gewindespindel 41, die mit ihrem rückwärtigen Ende drehbar in der Rückwandung der Tauchspule 37 gehalten ist. Auf der Gewindespindel 41 ist ein Eintauchelement 43 gehalten, wobei das Eintauchelement 43 eine Gewindebohrung aufweist, welche mit dem Außengewinde der Gewindespindel 41 in der Weise zusammenwirkt, dass bei einer Drehung der Gewindespindel 41 das Eintauchelement 43 translatorisch in die Spule 37 hinein- oder aus dieser herausbewegt wird. Das Eintauchtauchelement 43 besteht vorzugsweise aus einem Ferrit und ist zusätzlich durch die Innenwandung der Tauchspule 37 in seiner Verschieberichtung geführt.

Am vorderen Ende der Gewindespindel 41 ist ein zweites Zahnrad 45 drehfest angeordnet, welches mit dem auf der Hülse 33 drehfest gehaltenen ersten Zahnrad 35 kämmt.

Auf diese Weise wird die Drehbewegung des Lenkrads 1 und der damit drehfest gekoppelten Hülse 33 in eine translatorische Bewegung des Eintauchelements 43 der Tauchspuleneinheit 39 umgesetzt.

Die auf der Platine 19 vorgesehene Auswerteeinheit 11 (nur dieser Teil der Elektronikeinheit ist für das Verständnis der Erfindung von Bedeutung) wertet Induktivitätsänderungen der Tauchspuleneinheit 39 infolge der translatorischen Bewegung des Eintauchelements 43 aus und setzt so die Drehbewegung des Lenkrads in ein entsprechendes elektrisches Signal um. Hierbei kann es sich selbstverständlich um ein analoges oder ein digitales Signal handeln.

Zusätzlich zu der vorstehend beschriebenen Erfassungseinrichtung zur groben Erfassung des Lenkwinkels umfasst der Absolutwertgeber 5 gemäß Fig. 1 eine Einrichtung 47 zur genauen Erfassung des Lenkwinkels. Diese besteht einerseits aus einem als Ring ausgebildeten Geberteil 49, auf dessen Umfangsfläche eine Kodierung 51 vorgesehen ist. Diese besteht aus drei Spuren in Umfangsrichtung, in welchen in axial verlaufenden Zeilen jeweils drei Markierungen 53 angeordnet sind. Die jeweils drei Markierungen in einer Zeile stellen digitale Worte $W_i$ mit je drei Bit dar. Jeweils aufeinanderfolgende Worte $W_i$ sind vorzugsweise in Umfangsrichtung unmittelbar aneinander angrenzend vorgesehen.

Der Ring 49 wird auf die Hülse 33 aufgeschoben und ist auf dieser drehfest gehalten. Bei einer Drehung des Lenkrads 1 wird somit auch der Ring 49 zusammen mit der Hülse 33 gedreht.

Wie aus Fig. 2 ersichtlich, werden die auf der Umfangsfläche des Rings 49 vorgesehenen Markierungen 53 jeder Spur von jeweils einem Detektor 55 erfasst. Die drei Detektoren 55 können beispielsweise als Hall-Sensoren ausgebildet sein, welche entsprechend magnetisch ausgebildete Markierungen 53 der Kodierung 51 erfassen. Das Signal der Detektoren 55 ist ebenfalls der Auswerteeinheit 11 zugeführt.

Anstelle der drei Detektoren 55 kann selbstverständlich auch ein einziger Detektor verwendet werden, der die separate Erfassung der Markierungen 53 der drei Spuren mit ausreichender Geschwindigkeit ermöglicht. Die Markierungen 53 und Detektoren 55 können auch auf jede beliebige andere Weise realisiert sein, beispielsweise als optische Markierungen und ein optische Detektoren. Durch eine entsprechende Signalauswertung kann selbstverständlich auch nur ein einziger Sensor vorgesehen sein, der sowohl die Markierungen 51 sämtlicher Spuren abtastet.

Um z.B. eine Auflösung von 1,5° zu erreichen, sind 240 digitale Worte W; erforderlich.

Bei herkömmlichen digitalen Absolutwertgebem ist in der Regel eine Kodierung verwendet, die durch die Abtastung jedes Worts, d.h. der Bits in einer Zeile, die Ermittlung eines diesem Wort zugeordneten Werts ermöglicht. Bei der vorgenannten geforderten Auflösung von 1,5° wären somit 8 Bit erforderlich, um durch eine einmalige Abtastung eines Worts $W_i$ sofort den Drehwinkel ermitteln zu können. Dies wäre jedoch mit einem unverhältnismäßig hohen Aufwand verbunden, sowohl bei der Erstellung der Kodierung bzw. Herstellung des Rings 49 als auch bei der Realisierung der Detektoren 55.

Erfindungsgemäß wird daher vorgeschlagen, die absolute Position des Geberteils bzw. den absoluten Drehwinkel durch die Auswertung einer vorbestimmten Anzahl p aufeinanderfolgend detektierter digitaler Worte $W_i$, d.h durch die Auswertung jeweils eines p-Tupels $[W_i, W_{i+1}, ..., W_{i+p-1}]$ zu ermitteln.

In der dargestellten Ausfühungsform beträgt die Breite der Worte $W_i$ gleich drei Bit.

In der Praxis hat sich gezeigt, dass in diesem Fall durch die Auswertung jeweils dreier aufeinanderfolgender digitaler Worte $W_i$, die dann die Werte von 0 bis 7 annehmen können ($2^3-1=7$), ohne weiteres eine Auflösung von 1,5° realisierbar ist, wobei der maximal zu überfahrene Winkelbereich für eine Bestimmung des absoluten Winkels (abhängig von der Ausbildung der Detektoren und der Markierungen auf dem Geberteil) 4,5° beträgt.

Damit ist selbst bei der erstmaligen Inbetriebnahme des Absolutwertgebers 5 sichergestellt, dass nach einem Überfahren eines Winkelbereichs (in derselben Richtung) von 4,5° der absolute Winkel der Lenkwelle mit einer Auflösung und einer Genauigkeit besser als 1,5° bestimmbar ist.

Erfindungsgemäß wird die Kodierung so gewählt, dass die bereits genannten Bedingungen erfüllt sind, wobei hier p=3 zu setzen ist:

a) jeweils zwei benachbarte Worte $W_i$, $W_{i+1}$ weisen unterschiedliche Werte auf, d.h. es gilt $W_i \neq W_{i+1}$ (Schritterkennung);

b) die jeweils einem Wort $W_i$ benachbarten Worte $W_{i-1}$ und $W_{i+1}$ weisen unterschiedliche Werte auf, d.h. es gilt $W_{i-1} \neq W_{i+1}$ (Erkennung der Drehrichtungsänderung);

c) jede Folge $[W_i, W_{i+1}, W_{i+2}]$ von jeweils 3 aufeinanderfolgenden Worten der Kodierung ist zumindest innerhalb eines vorbestimmten Bereichs der Kodierung eindeutig, d.h. es gilt $[W_i, W_{i+1}, ..., W_{i+2}] \neq [W_k, W_{k+1}, W_{k+2}]$ für i≠k (Eindeutigkeit der Kodierung innerhalb eines Bereichs der Kodierung);

d) keine Folge $[W_i, W_{i+1}, W_{i+2}]$ darf innerhalb des zumindest einen Eindeutigkeitsbereichs der Kodierung als gespiegelte Folge $[W_{i+2}, W_{i+1}, W_i]$ existieren, d.h. es gilt $[W_i, W_{i+1}, W_{i+2}] \neq [W_{i+2-k}, W_{i+1-k}, W_{i-k}]$ (Erkennung der absoluten Drehrichtung).

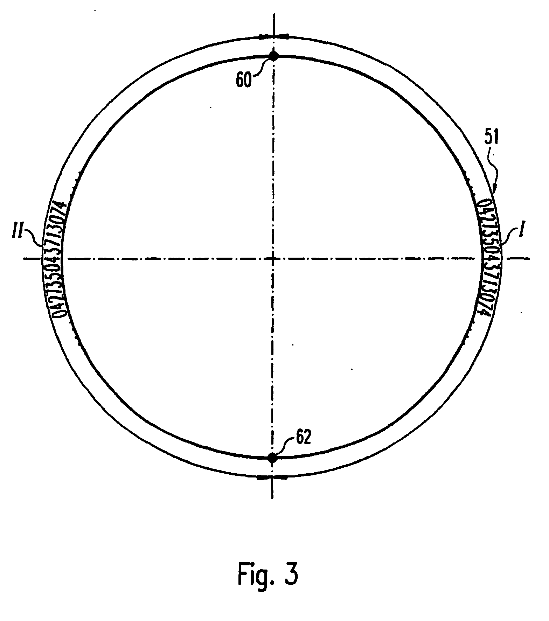

Unter Berücksichtigung sämtlicher dieser Bedingungen ergibt sich jedoch bei der verwendeten Wortbreite von drei Bit jedoch keine ausreichende Anzahl von möglichen Worten, so dass die gesamte Kodierung am Umfang des Rings 49 in zwei Bereiche I, II (Fig.3) aufgeteilt wurde, die jeweils eine Winkel von 180° abdecken.

In jedem der beiden Bereiche I, II wird dieselbe Kodierung verwendet, wobei in beiden Kodierungsbereichen dieselbe Richtung der Kodierung vorliegt. An den beiden Nahtstellen 60, 62 sind die vorgenannten Bedingungen ebenfalls erfüllt.

Bei dem in Fig. 3 schematisch dargestellten Beispiel für eine Kodierung des Rings 49 ergeben sich somit 120 digitale Worte $W_i$ pro Bereich, was der geforderten Auflösung von 1,5° entspricht.

Da die Tauchspuleneinheit 39 und der Ring 49 mechanisch mit der Lenkwelle 31 gekoppelt sind, stehen die Signale der als Groberfassungseinrichtung dienenden Tauchspuleneinheit und die Signale der Detektoren 55 in einem festen Zusammenhang. Die Mehrdeutigkeit der Signale der Detektoren, welche jeweils die 3-Bit-Worte erzeugen, kann in nachstehender Weise durch die zusätzliche Auswertung des Signals der Tauchspuleneinheit beseitigt werden.

Ausgangspunkt sei eine Situation in der der Absolutwertgeber 5 erstmalig an die Energieversorgung angeschlossen wird und demzufolge noch kein einziges digitales Wort $W_i$ der Kodierung 51 durch die Abtastung der Markierungen 53 mittels der Detektoren 55 eifasst wurde.

Dennoch wird in dieser Ausgangssituation der Auswerteeinheit 11 das Signal $S_T$ der Tauchspuleneinheit 39 zugeführt und kann von der Auswerteeinheit ausgewertet werden. Hierzu vergleicht die Auswerteeinheit 11 beispielsweise den momentanen Wert des Signals $S_T$ der Tauchspuleneinheit 39 mit einer vorbekannten Kennlinie $\alpha_n(S_T)$, die z.B. als funktionale Abhängigkeit oder in Form digitalisierter Werte in der Auswerteeinheit 11 abgelegt sein kann, und ermittelt auf diese Weise einen groben Wert für den Drehwinkel.

Wird der Drehwinkel $\alpha$ von anderen Komponenten des KFZ, z.B. von einer Steuereinheit zur Steuerung eines dynamischen Fahrwerks benötigt, so kann zunächst dieser grobe Wert $\alpha_a(S_T)$ vom Absolutwertgeber 5 an diese Steuereinheit ausgegeben werden.

Wird dann zu einem beliebigen Zeitpunkt die Lenkwelle gedreht und wird bei der Drehung wenigstens ein Winkelbereich von 4,5° in derselben Drehrichtung überstrichen, so kann die Auswerteeinheit bereits aus den drei

# EP 0 941 454 B1

ersten erfassten digitalen Worten $W_i$, d.h. dem ersten 3-Tupel, den absoluten Drehwinkel mit der durch die Kodierung vorgegebenen Genauigkeit bestimmt.

Zur Beseitigung der Mehrdeutigkeit des 3-Tupels - es ist zunächst unbekannt in welcher absoluten Position sich die Lenkwelle ausgehend von der Geradeausstellung befindet - ermittelt die Auswerteeinheit zunächst einen zulässigen Toleranzbereich für den aus dem Signal $S_T$ der Tauchspuleneinheit ermittelten groben Winkel $\alpha_n$. Hierzu ist in der Tauchspuleneinheit z.B. ein Wert für eine Fehlerschranke $\alpha$ gespeichert. Damit ermittelt die Auswerteeinheit 11 den Toleranzbereich zu $\alpha_n-\delta<\alpha<\alpha_a+\delta$, wobei die Breite $2\delta$ des Toleranzbereich kleiner ist als jeder der beiden Eindeutigkeitsbereiche der Kodierung des Geberteils, d.h. kleiner als 180°.

Des weiteren ermittelt die Auswerteeinheit 11 durch eine Auswertung des ersten 3-Tupels den ersten (mehrdeutigen, jedoch genauen) Drehwinkel $\alpha_r$, der im Bereich [0; 180[liegt.

Schließlich ermittelt die Auswerteeinheit 11, ob der Wert $\alpha_r$ kleiner oder gleich dem halben maximal möglichen Wert für den Drehwinkel $\alpha_r$ ist oder größer.

Abhängig von dieser Prüfung kann die Auswerteeinheit 11 den korrigierten Wert $\alpha_{r,korr}$ durch Auswertung der folgenden Vorschliften ermitteln:

$$\alpha_{r,korr} = INT[(\alpha_n+\delta)/\alpha_{r,max}] \cdot \alpha_{r,max} + \alpha_r \text{ für } \alpha_r \leq \alpha_{r,max}/2$$

$$\alpha_{r,korr} = INT[(\alpha_n-\delta)/\alpha_{r,max}] \cdot \alpha_{r,max} + \alpha_r \text{ für } \alpha_r > \alpha_{r,max}/2$$

Dabei ist mit INT die Integer-Division bezeichnet.

Ergibt sich beispielsweise durch die Auswertung des Signal $S_T$ der Tauchspuleneinheit ein Wert $\alpha=535°$ und durch die Auswertung der Kodierung ein Wert von $\alpha_r=3°$, so ist die Bedingung $\alpha_r=3°\leq90°$ erfüllt. Dies für durch die Auswertung der ersten der vorgenannten Bedingungen und damit zu $\alpha_{r,korr}=INT[555°/180°]\cdot180°+3=543°$, wobei die Fehlerschranke bei der Groberfassung des absoluten Winkels mittels der Tauchspuleneinheit zu $\delta=20°$ gewählt wurde.

Nach dieser erstmaligen Erfassung des exakten Lenkwinkels kann künftig der Absolutwert durch Detektieren der einzelnen Schritte und der Drehrichtungsänderungen durch einfaches Inkrementieren bzw. Dekrementieren ermittelt werden. Selbstverständlich kann jedoch auch bei jedem Schritt oder in vorbestimmten Abständen bzw. aus bestimmten Anlässen das vorstehend beschriebene Verfahren unter zusätzlicher Verwendung des Signals der Tauchspuleneinheit verwendet werden.

Im Folgenden wird ein einfaches Verfahren zur Ermittlung einer zulässigen Kodierung unter Berücksichtigung sämtlicher der in Anspruch 2 genannten Bedingungen erläutert:

In einem ersten Schritt werden zunächst sämtliche möglichen Folgen von p aufeinanderfolgenden Worten ermittelt und in einer Tabelle zusammengestellt.

Im zweiten Schritt werden alle gemäß den Bedingungen für die Schritt-Erkennung und die Erkennung von Änderungen der Bewegungsrichtung unzulässigen Folgen eliminiert.

In einem dritten Schritt wird eine beliebige Folge als Startwert ausgewählt.

Diese Folge wird in einem vierten Schritt in der erstellten Tabelle gestrichen. Ebenso wird die gespiegelte Folge gestrichen.

Im fünften Schritt werden die p-1 letzten Worte $W_{i+1}$, $W_{i+p-2}$ und $W_{i+p-1}$ der zuletzt gewählten Folge als die p-1 ersten Worte $W_i$, $W_{i+1}$,...,$W_{i+p-2}$ der darauf folgenden Folge der Kodierung verwendet und aus den verbleibenden Möglichkeiten in der erstellten Tabelle eine Folge ausgewählt, welche dieselben p-1 ersten Worte aufweist. Die ausgewälilte Folge wird wiederum ebenso gestrichen, wie die gespiegelte Folge.

Dieser fünfte Schritt wird solange wiederholt, bis eine ausreichende Kodierungslänge erreicht ist oder sämtliche verfügbaren Folgen verbraucht sind. Ggf. können der Startwert oder das Auswahlkriterium, welches von mehreren möglichen p-Tupeln ausgewählt wird, verändert werden, wenn das Verfahren zu früh abbrechen sollte.

Bei einem Kaskadieren von mehreren Kodierungsbereichen kann das Einhalten der Bedingungen an den Nahtstellen "von Hand" überprüft bzw. sichergestellt werden.

Im Folgenden wird eine weitere, nicht dargestellte Ausführungsform für einen digitalen Absolutwertgeber erläutert:

Bei dieser Ausführungsform kann zur Vermeidung von Problemen bei der Schritterkennung durch Undefinierte Übergangszustände an den Grenzen benachbarter Worte eine Spur der Kodierung so ausgebildet sein, dass in dieser Spur eine alternierende Folge von Werten logisch "Null" und logisch "Eins" entsteht. Aus dieser Information kann dann durch eine Abtastung dieser Spur mittels zweier in Abtastrichtung (vorzugsweise um einen halben Schritt) versetzten Detektoren eine Schritterkennung durch eine geeignete Auswertung der Sensorsignale in der Auswerteeinheit erfolgen. Die Auswerteeinheit kann dann zu einem "sicheren Zeitpunkt" eine Abtasht des betreffenden digitalen Worts auslösen. Des weiteren kann die Auswerteeinheit aus der Phasenverschiebung der Signale (unter Verwendung der Kenntnis der Anordnung der Detektoren) eine Erkennung der Drehrichtung sowie eine Erkennung eines Wechsels der Dreluichtung ermitteln.

Durch die Anforderung einer alternierenden Folge von "Null" und "Eins" in einer der Spuren der Kodierung wird jedoch die Anzahl der zur Verfügung stehenden Folgen aus p digitalen Worten, welche innerhalb eines Bereichs eindeutig sind, deutlich geringer als bei der zuvor dargestellten Variante. Dies gilt zumindest dann, wenn man alle der vorgenannten Bedingungen für die Kodierung einhalten wollte.

Falls jedoch die Drehrichtungserkennung bzw. die Erkennung eines Drehrichtungswechsels durch die Auswertung der Signale der zueinander versetzten Detektoren erfolgt, so können innerhalb eines Eindeutigkeitsbereichs der Kodierung zu einem, mehreren oder allen (verschachtelten) Folgen aus p digitalen Worten auch die jeweils gespiegelte Folge vorhanden sein. Denn durch die bekannte Drehrichtung weiss die Auswerteeinheit selbst bei Verwendung eines FIFO-Registers (und damit verbundenen identischen detektierten p-Tupeln beim Überfahren einer bestimmten Folge aus der einen Richtung und beim Überfahren der gespiegelten Folge aus der anderen Richtung), um welche Folge innerhalb des Eindeutigkeitsbereichs es sich handelt.

Im Sinne einer möglichst großen Länge der Kodierung innerhalb eines Eindeutigkeitsbereichs wird man selbstverständlich zu allen oder fast allen Folgen auch die betreffende gespiegelte Folge verwenden.

In eine anderen Ausfülirungsform kann selbstverständlich auch zusätzlich zu den m Spuren der digitalen Worte eine weitere Spur mit einer alternierenden Folge von "Null" und "Eins" verwendet werden, die mit zwei zusätzlichen Detektoren abgetastet wird. Dabei wird die Schritterkennung bzw. die Erkennung der Drehrichtung oder eines Drehrichtungswechsels von der Kodierung entkoppelt.

## Patentansprüche

1.  Absolutwertgeber,

    a) mit einem Geberteil (49), auf welchem eine Kodierung (51) aus einer vorbestimmten Anzahl n örtlich aufeinanderfolgender digitaler Worte W; mit einer Breite von m Bit ($b_1$, $b_2$, ..., $B_m$) in m nebeneinander angeordneten Spuren vorgesehen ist,

    b) mindestens einem Detektor (55) zur im Wesentlichen gleichzeitigen Erfassung der einzelnen Bit ($b_1$, $b_2$, ... , $B_m$) eines digitalen Worts $W_i$,

    c) wobei das Geberteil (49) und der mindestens eine Detektor (55) relativ zueinander bewegbar sind,

    d) und einer Auswerteeinheit (11), welcher das Signal des mindestens einen Detektors (55) zugeführt ist, **dadurch gekennzeichnet,**

    e) dass die Auswerteeinheit (11) so ausgebildet ist, dass sie die absolute Position des Geberteils (49) in Bezug auf den zumindest einen Detektor (55) zumindest einmalig durch die Auswertung einer vorbestimmten Anzahl p aufeinanderfolgend detektierter digitaler Worte $W_i$ ermittelt,

    g) wobei die Auswerteeinheit (11) einem detektierten p-Tupel [$W_i$,$W_{i+1}$,...,$W_{i+p-1}$], bestehend aus der vorbestimmten Anzahl p aufeinanderfolgend detektierter digitaler Worte $W_i$, einen definierten Positionswert des Geberteils (49) in Bezug auf den zumindest einen Detektor (55) zuordnen kann und

    h) wobei die Kodierung so ausgebildet ist, dass alle Folgen [$W_i$,$W_{i+1}$,...,$W_{i+p-1}$] von aus der vorbestimmten Anzahl p bestehenden aufeinanderfolgenden Worte $W_i$ der Kodierung zumindest innerhalb eines vorbestimmten Eindeutigkeitsbereichs (I, II) der Kodierung (51) eindeutig sind und innerhalb jedes Eindeutigkeitsbereichs (I, II) die digitalen Worte $W_i$ nicht eindeutig sind.

2.  Absolutwertgeber nach Anspruch 1, **dadurch gekennzeichnet, dass** die Kodierung (51) zusätzlich zumindest eine der folgenden Bedingungen erfüllt:

    a) jeweils zwei benachbarte Worte [$W_i$, $W_{i+1}$] weisen unterschiedliche Werte auf;

    b) die jeweils einem Wort $W_i$ benachbarten Worte $W_{i-1}$ und $W_{i+1}$ weisen unterschiedliche Werte auf;

    c) keine Folge [$W_i$,$W_{i+1}$,...,$W_{i+p-1}$] darf innerhalb des zumindest einen Eindeutigkeitsbereichs (I, II) der Kodierung (51) als gespiegelte Folge $[W_{i+p-1},...,W_{i+1},W_i]$ existieren.

3. Absolutwertgeber nach Anspruch 1 oder 2, **dadurch gekennzeichnet, dass** die Auswerteeinheit (11) so ausgebildet ist, dass sie die absolute Position des Geberteils (49) relativ zu dem zumindest einen Detektor (55) jeweils durch das Zuordnen des betreffenden Positionswerts zu dem detektierten p-Tupel $[W_i,W_{i+1},...,W_{i+p-1}]$ ermittelt.

4. Absolutwertgeber nach Anspruch 3, **dadurch gekennzeichnet, dass** die Auswerteeinheit (11) so ausgebildet ist, dass sie nach einer einmaligen Ermittlung der absoluten Position die künftige Absolutposition des Geberteils (49) relativ zu dem zumindest einen Detektors (55) durch die Inkrementierung oder Dekrementierung des einmalig ermittelten Positionswerts bestimmt.

5. Absolutwertgeber nach einem der vorhergehenden Ansprüche, **dadurch gekennzeichnet, dass** die Auswerteeinheit (11) so ausgebildet ist, dass sie die Änderung der Bewegungsrichtung durch den Vergleich der digitalen Worte $W_{p-3}$ und $W_{p-1}$ eines detektierten p-Tupels ermittelt und bei deren Übereinstimmung einen Änderung der Drehrichtung nach Überfahren des digitalen Worts $W_{p-2}$ detektiert.

6. Absolutwertgeber nach einem der vorhergehenden Ansprüche, **dadurch gekennzeichnet, dass** die Auswerteeinheit (11) so ausgebildet ist, dass sie die absolute Bewegungsrichtung durch den Vergleich eines detektierten p-Tupels mit einem gespeicherten Abbild der Kodierung (51) ermittelt, wobei hierzu die Bedingung c) gemäß Anspruch 2 erfüllt ist.

7. Absolutwertgeber nach einem der vorhergehenden Ansprüche, **dadurch gekennzeichnet, dass** die Auswerteeinheit (11) so ausgebildet ist, dass sie die absolute Position sowohl durch Inkrementierung/Dekrementierung des vorherigen Wertes als auch durch Auswertung des betreffenden detektierten p-Tupels ermittelt und bei fehlender Übereinstimmung ein Fehlersignal erzeugt.

8. Absolutwertgeber nach einem der vorhergehenden Ansprüche, **dadurch gekennzeichnet, dass** die Breite m der digitalen Worte $W_i$ gleich 3 ist und dass die vorbestimmte Anzahl p aufeinanderfolgender Worte zur Positionsermittlung gleich 3 ist.

9. Absolutwertgeber nach einem der vorhergehenden Ansprüche, **dadurch gekennzeichnet, dass** die Kodierung (51) auf dem Geberteil (49) mindestens zwei zusammenhängende jeweils die vorbestimmte Anzahl n digitaler Worte $W_i$ aufweisende Bereiche (I, II) umfasst.

10. Absolutwertgeber nach Anspruch 9, **dadurch gekennzeichnet, dass** auch an der zumindest einen Nahtstelle (60, 62) der mindestens zwei Bereiche (I, II) die Bedingungen gemäß Anspruch 2 erfüllt sind.

11. Absolutwertgeber nach einem der vorhergehenden Ansprüche, **dadurch gekennzeichnet, dass** zur Erkennung der Drehrichtung und/oder eines Drehrichtungwechsels und/oder zur Schritterkennung eine zu den Spuren der digitalen Worte $W_i$ zusätzliche Spur mit einer aufeinanderfolgenden Folge der Werte logisch "Null" und logisch "Eins" vorgesehen ist oder dass eine Spur der digitalen Worte in dieser Weise ausgebildet ist.

12. Absolutwertgeber nach Anspruch 11, **dadurch gekennzeichnet, dass** zur Abtastung der Spur mit der alternierenden Folge der Werte logisch "Null" und logisch "Eins" zwei vorzugsweise um einen halben Schritt versetzte Detektoren vorgesehen sind und dass die Auswerteeinheit so ausgebildet ist, dass sie aus der Phasenverschiebung der Sensorsignale die Drehrichtung und/oder einen Drehrichtungswechsel ermittelt.

13. Absolutwertgeber nach Anspruch 11 oder 12, **dadurch gekennzeichnet, dass** die Kodierung so ausgebildet ist, dass innerhalb des zumindest einen Eindeutigkeitsbereichs (I, II) zu einer, mehreren oder allen Folgen $[W_i,W_{i+1},...,W_{i+p-1}]$ der Kodierung (51) auch die jeweils gespiegelte Folge $[W_{i+p-1},...,W_{i+1},W_i]$ existiert und dass die Auswerteinheit (11) aus der Drehrichtung und dem detektierten p-Tupel den Absolutwert bestimmt.

14. Absolutwertgeber nach einem der Ansprüche 9 bis 13, **dadurch gekennzeichnet, dass** eine Erfassungseinrichtung (39) zur groben Erfassung der absoluten Position vorgesehen ist, wobei deren Genauigkeit besser ist als die Differenz der den beiden Grenzen jedes der mindestens zwei Bereiche (I, II) entsprechenden Werte, und dass die Auswerteeinheit (11) so ausgebildet ist, dass sie zur Bestimmung der absoluten Position innerhalb der gesamten Kodierung (51) zunächst den groben absoluten Positionswert mittels der Erfassungsvorrichtung (39) ermittelt und den exakten absoluten Positionswert unter zusätzlicher Verwendung der für sich genommen mehrdeutigen Information des zumindest einen Detektors (55) bestimmt.

15. Absolutwertgeber nach Anspruch 14, **dadurch gekennzeichnet, dass** die Auswerteeinheit (11) so ausgebildet ist, dass sie zur Ermittlung des exakten absoluten Positionswerts folgende Schritte ausführt:

   a) Ermittlung des dem aktuellen Signal ($S_T$) der Erfassungseinrichtung (39) zur groben Erfassung entsprechenden Positionswerts $\alpha_a$;

   b) Ermittlung einer unteren Schranke $\alpha_a$-$\delta$ und oberen Schranke $\alpha_a$+$\delta$ eines zulässigen Toleranzbereichs [$\alpha_a$-$\delta$; $\alpha_a$+$\delta$] für den ermittelten Positionswert $\alpha_a$, wobei die Breite ($2\delta$) des Toleranzbereich kleiner ist als jeder Eindeutigkeitsbereich (I, II) der Kodierung (51) des Geberteils (49);

   c) Ermittlung des mehrdeutigen Positionswerts $\alpha_r$ durch Auswertung des Signals des zumindest einen, die Kodierung (51) erfassenden Detektors (55);

   d) Ermittlung des korrigierten absoluten Wertes $\alpha_{r,korr}$ nach der Vorschrift:

$$\alpha_{r,korr} = INT[(\alpha_a+\delta)/\alpha_{r,max}] \cdot \alpha_{r,max} + \alpha_r \text{ für } \alpha_r \leq \alpha_{r,max}/2$$

$$\alpha_{r,korr} = INT[(\alpha_a-\delta)/\alpha_{r,max}] \cdot \alpha_{r,max} + \alpha_r \text{ für } \alpha_r > \alpha_{r,max}/2$$

16. Absolutwertgeber nach Anspruch 15, **dadurch gekennzeichnet, dass** die Auswerteeinheit (11) so ausgebildet ist, dass sie prüft, ob der ermittelte Wert $\alpha_{r,korr}$ innerhalb des zulässigen Toleranzbereichs liegt und im Fehlerfall ein Fehlersignal erzeugt und/oder einen Abgleich der Erfassungseinrichtung (39) für die Groberfassung der absoluten Position vornimmt.

17. Absolutwertgeber nach Anspruch 16, **dadurch gekennzeichnet, dass** die Auswerteeinheit (11) so ausgebildet ist, dass sie die Differenz zwischen dem ermittelten Absolutwert $\alpha_{r,korr}$ und dem Positionswert $\alpha_a$ ermittelt und in einem vorzugsweise nicht-flüchtigen Speicher ablegt und für künftige Ermittlungen des Positionswerts $\alpha_a$ als Korrekturwert verwendet.

18. Absolutwertgeber nach einem der vorhergehenden Ansprüche, **dadurch gekennzeichnet, dass** der Absolutwertgeber (5) als Drehgeber ausgebildet ist.

19. Absolutwertgeber nach Anspruch 18, **dadurch gekennzeichnet, dass** das Geberteil (49) drehbar mit einem Teil (31) verbindbar ist, dessen Drehwinkel erfasst werden soll, und dass die auf dem Geberteil (49) vorgesehene Kodierung (51) endlos, vorzugsweise auf dem Außenumfang des Geberteils (49) vorgesehen ist, und dass an jeder Nahtstelle (60, 62) die Bedingungen gemäß Anspruch 2 erfüllt sind.


**Claims**

1. Absolute value sensor,

   a) with a sensor part (49), on which a coding (51) is provided, comprising a predetermined number n of locally successive digital words $W_i$ with a width of m bits ($b_1$, $b_2$, ..., $B_m$) in m tracks arranged next to one another,

   b) at least one detector (55) for the essentially simultaneous sensing of the individual bits ($b_1$, $b_2$,..., $B_m$) of a digital word $W_i$,

   c) the sensor part (49) and the at least one detector (55) being movable in relation to each other,

   d) and an evaluation unit (11), to which the signal of the at least one detector (55) is fed, characterized

   e) in that the evaluation unit (11) is designed in such a way that it ascertains the absolute position of the sensor part (49) with respect to the at least one detector (55) at least once by the evaluation of a predetermined number p of successively detected digital words $W_i$,

f) the evaluation unit (11) being able to assign a defined position value of the sensor part (49) with respect to the at least one detector (55) to a detected p-tuple $[W_i, W_{i+1}, ..., W_{i+p-1}]$, comprising the predetermined number p of successively detected digital words $W_i$, and

g) the coding being designed such that all the series $[W_i, W_{i+1}, ..., W_{i+p-1}]$ of successive words $W_i$, comprising the predetermined number p, of the coding are unambiguous, at least within a predetermined region of unambiguity (I, II) of the coding (51) and, within each region of unambiguity (I, II), the digital words $W_i$ are not unambiguous.

2. Absolute value sensor according to Claim 1, **characterized in that** the coding (51) additionally satisfies at least one of the following conditions:

a) respective pairs of neighbouring words $[W_i, W_{i+i}]$ have different values;

b) the words $W_{i-1}$ and $W_{i+1}$ respectively neighbouring a word $W_i$ have different values;

c) no series $[W_i, W_{i+1}, ..., W_{i+p-1}]$ may exist as a mirrored series $[W_i, W_{i+p-1}, ..., W_{i+1}, W_i]$ within the at least one region of unambiguity (I, II) of the coding (51).

3. Absolute value sensor according to Claim 1 or 2, **characterized in that** the evaluation unit (11) is designed in such a way that it ascertains the absolute position of the sensor part (49) in relation to the at least one detector (55) in each case by the assignment of the position value concerned to the detected p-tuple $[W_i, W_{i+1}, ..., W_{i+p-1}]$.

4. Absolute value sensor according to Claim 3, **characterized in that** the evaluation unit (11) is designed in such a way that, after the absolute position has been ascertained once, the future absolute position of the sensor part (49) in relation to the at least one detector (55) is determined by the incrementing or decrementing of the position value ascertained once.

5. Absolute value sensor according to one of the preceding claims, **characterized in that** the evaluation unit (11) is designed in such a way that the changing of the direction of movement is ascertained by the comparison of the digital words $W_{p-3}$ and $W_{p-1}$ of a detected p-tuple and, if they coincide, a change in the direction of rotation is detected after passing over the digital word $W_{p-2}$.

6. Absolute value sensor according to one of the preceding claims, **characterized in that** the evaluation unit (11) is designed in such a way that the absolute direction of movement is ascertained by the comparison of a detected p-tuple with a stored replica of the coding (51), the condition c) according to Claim 2 being satisfied for this purpose.

7. Absolute value sensor according to one of the preceding claims, **characterized in that** the evaluation unit (11) is designed in such a way that the absolute position is ascertained by incrementing/decrementing the previous value and by evaluation of the detected p-tuple concerned, and if they do not coincide, an error signal is generated.

8. Absolute value sensor according to one of the preceding claims, **characterized in that** the width m of the digital words $W_i$ is equal to 3 and **in that** the predetermined number p of successive words for ascertaining the position is equal to 3.

9. Absolute value sensor according to one of the preceding claims, **characterized in that** the coding (51) on the sensor part (49) comprises at least two contiguous regions (I, II), each having the predetermined number n of digital words $W_i$.

10. Absolute value sensor according to Claim 9, **characterized in that** the conditions according to Claim 2 are satisfied even at the at least one join (60, 62) of the at least two regions (I, II).

11. Absolute value sensor according to one of the preceding claims, **characterized in that**, for detecting the direction of rotation and/or a change in the direction of rotation and/or for detecting steps, a track additional to the tracks of the digital words $W_i$ with a successive series of the values logical "zero" and logical "one" is provided or **in that** a track of the digital words is formed in this way.

**12.** Absolute value sensor according to Claim 11, **characterized in that**, for scanning the track with the alternating series of the values logical "zero" and logical "one", two detectors which are preferably offset by half a step are provided and **in that** the evaluation unit is designed in such a way that it ascertains the direction of rotation and/or a change in the direction of rotation from the phase shift of the sensor signals.

**13.** Absolute value sensor according to Claim 11 or 12, **characterized in that** the coding is designed in such a way that there exists within the at least one region of unambiguity (I, II) with respect to one, more or all the series $[W_i, W_{i+1}, ..., W_{i+p1}]$ of the coding (51) also the respectively mirrored series $[W_{i+p1}, ..., W_{i+1}, W_i]$ and **in that** the evaluation unit (11) determines the absolute value from the direction of rotation and the detected p-tuple.

**14.** Absolute value sensor according to one of Claims 9 to 13, **characterized in that** a sensing device (39) for roughly sensing the absolute position is provided, its accuracy being better than the difference of the values corresponding to the two limits of each of the at least two regions (I, II), and **in that** the evaluation unit (11) is designed in such a way that, for determining the absolute position within the entire coding (51), it firstly ascertains the rough absolute position value by means of the sensing device (39) and determines the exact absolute position value by additional use of the in itself ambiguous information of the at least one detector (55).

**15.** Absolute value sensor according to Claim 14, **characterized in that** the evaluation unit (11) is designed in such a way that, for ascertaining the exact absolute position value, it carries out the following steps:

a) ascertainment of the current signal ($S_T$) of the sensing device (39) for roughly sensing the corresponding position value $\alpha_a$;

b) ascertainment of a lower limit $\alpha_a-\delta$ and upper limit $\alpha_a+\delta$ of a permissible tolerance range $[\alpha_a\delta; \alpha_a+\delta]$ for the ascertained position value $\alpha_a$, the width ($2\delta$) of the tolerance range being smaller than each region of unambiguity (I, II) of the coding (51) of the sensor part (49);

c) ascertainment of the ambiguous position value $\alpha_r$ by evaluation of the signal of the at least one detector (55) sensing the coding (51);

d) ascertainment of the corrected absolute value $\alpha_{r,korr}$ as specified by:

$$\alpha_{r,korr} = INT[(\alpha_a+\delta)/\alpha_{r,max}]\cdot\alpha_{r,max} + \alpha_r \text{ for } \alpha_r \leq \alpha_{r,max}/2$$

$$\alpha_{r,korr} = INT[(\alpha_a-\delta)/\alpha_{r,max}]\cdot\alpha_{r,max} + \alpha_r \text{ for } \alpha_r > \alpha_{r,max}/2$$

**16.** Absolute value sensor according to Claim 15, **characterized in that** the evaluation unit (11) is designed in such a way that it checks whether the ascertained value $\alpha_{r,korr}$ lies within the permissible tolerance range and, in the event of an error, generates an error signal and/or performs an adjustment of the sensing device (39) for the rough sensing of the absolute position.

**17.** Absolute value sensor according to Claim 16, **characterized in that** the evaluation unit (11) is designed in such a way that the difference between the ascertained absolute value $\alpha_{r,korr}$ and the position value $\alpha_a$ is ascertained and stored in a preferably non-volatile memory and is used as a correction value for future ascertainments of the position value $\alpha_a$.

**18.** Absolute value sensor according to one of the preceding claims, **characterized in that** the absolute value sensor (5) is designed as a rotation sensor.

**19.** Absolute value sensor according to Claim 18, **characterized in that** the sensor part (49) is able to be rotatably connected to a part (31) of which the angle of rotation is to be sensed, and **in that** the coding (51) provided on the sensor part (49) is provided endlessly, preferably on the outer circumference of the sensor part (49), and **in that** the conditions according to Claim 2 are satisfied at each join (60, 62).

**EP 0 941 454 B1**

**Revendications**

1.  Indicateur de valeur absolue

    a) comportant une partie indicatrice (49) sur laquelle on a prévu un codage (51) d'un nombre prédéterminé n de mots numériques $W_i$ qui se succèdent localement d'une largeur de m bits ($b_1$, $b_2$, ..., $B_m$) dans m pistes situées l'une à côté de l'autre,

    b) comportant au moins un détecteur (55) essentiellement destiné à la détection simultanée des bits isolés ($b_1$, $b_2$, ..., $B_m$) d'un mot numérique $W_i$,

    c) dans lequel la partie indicatrice (49) et le détecteur (55) au moins au nombre d'un peuvent se déplacer l'un par rapport à l'autre,

    d) et comporte une unité d'évaluation (11) à laquelle est amené le signal du détecteur (55) au moins au nombre d'un,
    **caractérisé en ce que**

    e) l'unité d'évaluation (11) est formée de telle sorte qu'elle détermine au moins une fois la position absolue de la partie indicatrice (49) relativement au détecteur (55) au moins au nombre d'un, au moyen de l'évaluation d'un nombre p prédéterminé de mots numériques $W_i$ détectés successivement,

    g) l'unité d'évaluation (11) pouvant attribuer à un p-tuple détecté [$W_i$, $W_{i+1}$, ..., $W_{i+p-1}$], composé du nombre p prédéterminé de mots numériques $W_i$ détectés successivement, une valeur de position de la partie indicatrice définie (49) relativement au détecteur (55) au moins au nombre d'un,

    h) le codage étant conçu de telle sorte que toutes les séquences ($W_i$, $W_{i+1}$, ..., $W_{i+p-1}$] du codage constitué de mots $W_i$ successifs présents selon un nombre prédéterminé p sont univoques au moins à l'intérieur d'un domaine d'univocité (I, II) prédéterminé du codage (51) et que les mots numériques $W_i$ ne sont pas univoques à l'intérieur de chacun des domaines d'univocité (I, II).

2.  Indicateur de valeur absolue selon la revendication 1 **caractérisé en ce que** le codage (51) remplit en outre au moins l'une des conditions suivantes :

    a) deux mots [$W_i$, $W_{i+1}$] voisins présentent à chaque fois des valeurs différentes ;

    b) chacun des mots $W_{i-1}$ et $W_{i+1}$ voisins d'un mot W; présentent des valeurs différentes,

    c) il ne doit exister aucune séquence [$W_i$, $W_{i+1}$, ..., $W_{i+p-1}$] à l'intérieur du domaine d'univocité (I, II), au nombre d'au moins un, du codage (51) qui soit une séquence réfléchie [$W_{i+p-1}$, ..., $W_{i+1}$, $W_i$].

3.  Indicateur de valeur absolue selon la revendication 1 ou 2 **caractérisé en ce que** l'unité d'évaluation (11) est formée de telle manière qu'elle détermine la position absolue de la partie indicatrice (49) par rapport au détecteur (55), au moins au nombre d'un, à chaque fois en attribuant au p-tuple détecté [$W_i$, $W_{i+1}$, ..., $W_{i+p-1}$] la valeur de position correspondante.

4.  Indicateur de valeur absolue selon la revendication 3 **caractérisé en ce que** l'unité d'évaluation (11) est formée de telle manière que, suite à une détermination unique de la position absolue, elle établit la position absolue ultérieure de la partie indicatrice (49) par rapport au détecteur (55), au moins au nombre d'un, en incrémentant ou en décrémentant la valeur de position déterminée de façon unique.

5.  Indicateur de valeur absolue selon l'une des revendications précédentes **caractérisé en ce que** l'unité d'évaluation (11) est formée de telle manière qu'elle détermine la modification dans la direction du déplacement en comparant les mots numériques $W_{p-3}$ et $W_{p-1}$ d'un p-tuple détecté et qu'elle détecte une modification de la direction de rotation au moyen de sa concordance après le passage du mot numérique $W_{p-2}$.

6.  Indicateur de valeur absolue selon l'une des revendications précédentes **caractérisé en ce que** l'unité d'évaluation (11) est formée de telle manière qu'elle détermine la direction absolue du déplacement en comparant un p-tuple détecté avec une représentation enregistrée du codage (51), la condition c) de la revendication 2 devant alors être remplie.

**7.** Indicateur de valeur absolue selon l'une des revendications précédentes **caractérisé en ce que** l'unité d'évaluation (11) est formée de telle manière qu'elle détermine la position absolue aussi bien par l'incrémentation / la décrémentation de la valeur précédente que par l'évaluation du p-tuple détecté correspondant et qu'elle produit un signal d'erreur lorsqu'il n'y a pas concordance.

**8.** Indicateur de valeur absolue selon l'une des revendications précédentes **caractérisé en ce que** la largeur m des mots numériques $W_i$ est égale à 3 et que le nombre prédéterminé p de mots successifs servant à la détermination de la position est égal à 3.

**9.** Indicateur de valeur absolue selon l'une des revendications précédentes **caractérisé en ce que** le codage (51) sur la partie indicatrice (49) comprend au moins deux domaines successifs (I, II) qui présentent chacun le nombre prédéterminé n de mots numériques $W_i$.

**10.** Indicateur de valeur absolue selon la revendication 9 **caractérisé en ce que** sur l'interface (60, 62), au moins au nombre d'une, des deux domaines (I, II), au moins au nombre de deux, les conditions de la revendication 2 sont aussi remplies.

**11.** Indicateur de valeur absolue selon l'une des revendications précédentes **caractérisé en ce que,** afin de reconnaître la direction de rotation et/ou une modification de la direction de rotation et/ou afin de reconnaître la progression, on a prévu une piste qui vient s'ajouter aux pistes des mots numériques $W_i$ et qui comporte une séquence successive des valeurs logiquement " nul " et logiquement " un " ou qu'une piste des mots numériques est formée de cette manière.

**12.** Indicateur de valeur absolue selon la revendication 11 **caractérisé en ce que,** afin de balayer la piste avec la séquence alternante des valeurs logiquement " nul " et logiquement " un ", on a prévu deux détecteurs de préférence décalés d'un demi pas de progression et que l'unité d'évaluation est formée de telle manière qu'elle détermine la direction de rotation et/ou une modification de la direction de rotation issue du décalage de phase des signaux du capteur.

**13.** Indicateur de valeur absolue selon l'une des revendications 11 ou 12 **caractérisé en ce que** le codage est réalisé de telle manière qu'à l'intérieur d'un domaine d'univocité (I, II), au moins au nombre d'un, il existe aussi pour une, plusieurs ou toutes les séquences $[W_i, W_{i+1}, ..., W_{i+p-1}]$ du codage (51) la séquence réfléchie $[W_{i+p-1}, ..., W_{i+1}, W_i]$ et que l'unité d'évaluation (11) détermine la valeur absolue issue de la direction de rotation et du p-tuple détecté.

**14.** Indicateur de valeur absolue selon l'une des revendications 9 à 13 **caractérisé en ce que** l'on a prévu un dispositif de détection (39) destiné à une détection approximative de la position absolue; l'exactitude de ce dispositif sera supérieure à la différence des valeurs correspondant aux deux limites de chacun des deux domaines d'univocité (I, II), au moins au nombre de deux, et l'unité d'évaluation (11) sera formée de telle manière que, pour déterminer la position absolue à l'intérieur de l'ensemble du codage (51), elle détermine d'abord la valeur approximative de la position absolue à l'aide du dispositif de détection (39) et qu'elle détermine la valeur exacte de la position absolue en ayant aussi recours à l'information plurivoque prise en soi du détecteur (55), au moins au nombre d'un.

**15.** Indicateur de valeur absolue selon la revendication 14 **caractérisé en ce que** l'unité d'évaluation (11) est formée de telle sorte qu'elle réalise les étapes suivantes pour déterminer la valeur exacte de la position absolue :

a) détermination de la valeur de la position $\alpha_2$ correspondant au signal courant ($S_T$) du dispositif de détection (39) destinée à déterminer la valeur approximative ;

b) détermination d'une limite inférieure $\alpha_s-\delta$ et d'une limite supérieure $\alpha_s+\delta$ d'une zone de tolérance admissible $[\alpha_s-\delta; \alpha_s+\delta]$ pour la valeur déterminée de la position absolue $\alpha_s$, la largeur ($2\delta$) de la zone de tolérance étant inférieure à chacun des domaines d'univocité (I, II) du codage (51) de la partie indicatrice (49) ;

c) détermination de la valeur plurivoque de la position $\alpha_T$ par l'évaluation du signal du détecteur (55), au moins au nombre d'un, qui reconnaît le codage (51) ;

d) détermination de la valeur absolue corrigée $\alpha_{Tcorr}$ selon la règle

$$\alpha_{Tcorr} = INT[(\alpha_s+\delta)/\alpha_{Tmax}] \cdot \alpha_{Tmax} + \alpha_T \text{ pour } \alpha_T \ \alpha_{Tmax} /2$$

$$\alpha_{Tcorr} = INT[(\alpha_s-\delta)/\alpha_{Tmax}] \cdot \alpha_{Tmax} + \alpha_T \text{ pour } \alpha_T > \alpha_{Tmax} /2$$

16. Indicateur de valeur absolue selon la revendication 15 **caractérisé en ce que** l'unité d'évaluation (11) est conçue de telle manière qu'elle vérifie si la valeur déterminée $\alpha_{Tcorr}$ est comprise dans la zone de tolérance admissible et qu'en cas d'erreur elle émet un signal d'erreur et/ou qu'elle réalise une mise au point du dispositif de détection (39) pour l'évaluation approximative de la position absolue.

17. Indicateur de valeur absolue selon la revendication 16 **caractérisé en ce que** l'unité d'évaluation (11) est formée de telle manière qu'elle détermine la différence entre la valeur absolue déterminée $\alpha_{Tcorr}$ et la valeur de la position $\alpha_s$ et qu'elle la stocke dans une mémoire de préférence rémanente et qu'elle l'utilise pour des déterminations ultérieures de la valeur de la position $\alpha_s$ en tant que valeur de correction.

18. Indicateur de valeur absolue selon l'une des revendications précédentes **caractérisé en ce que** l'indicateur de valeur absolue (5) est formé en tant qu'encodeur.

19. Indicateur de valeur absolue selon la revendication 18 **caractérisé en ce que** la partie indicatrice (49) orientable peut être reliée à une pièce (31) dont l'écart angulaire doit être détecté et qu'on a prévu que le codage (51) soit sans fin sur la partie indicatrice (49), de préférence sur la partie externe de la partie indicatrice (49), et que sur chacune des interfaces (60, 62) les conditions de la revendication 2 sont remplies.

Fig. 1

EP 0 941 454 B1

Fig. 2

Fig. 3